Europäisches Patentamt

European Patent Office

Office européen des brevets

(11) Publication number: **0 439 647 A1**

# EUROPEAN PATENT APPLICATION

(21) Application number: **90101769.9**

(22) Date of filing: **30.01.90**

(51) Int. Cl.⁵: **B62K 17/00**

(43) Date of publication of application:
**07.08.91 Bulletin 91/32**

(84) Designated Contracting States:
**AT BE CH DE DK ES FR GB GR IT LI LU NL SE**

(71) Applicant: **Rossi, Danilo**
**Piazza Napoli 4**
**I-20146 Milan(IT)**

Applicant: **Gilardoni, Sergio**
**Largo Gelsomini, 2**
**I-20146 Milan(IT)**

(72) Inventor: **Rossi, Danilo**
**Piazza Napoli 4**
**I-20146 Milan(IT)**
Inventor: **Gilardoni, Sergio**
**Largo Gelsomini, 2**
**I-20146 Milan(IT)**

(74) Representative: **Monti, Umberto**
**Via Washington 48**
**I-20146 Milano(IT)**

(54) **A bicycle equipped with a drive transmission device comprising a foot-rest for the driver.**

(57) The invention relates to a bicycle equipped with a particular drive transmission device comprising a foot-board (10) for the rider; two simmetrically centered discs (12), one on each side of the rear wheel and connected together by a transverse hub (14) which is eccentric in respect of both the discs (12) and the rear wheel axle, a fork (9) pivoted at the ends of said hub (14) and supporting the foot-board (10).

Fig.1

EP 0 439 647 A1

# A BICYCLE EQUIPPED WITH A DRIVE TRANSMISSION DEVICE COMPRISING A FOOT-REST FOR THE RIDER

This invention relates to a bicycle equipped with a particular drive transmission device comprising a foot-board or foot-rest for the rider.

As it is well known, in conventional bicycles the devices for the transmission of the motion to the driven rear wheel provides for a pedal crank driving a pinion which is properly dimensioned for the best transmission efficiency.

The object of the present invention is to realize a motion transmission device which allows for a number of useful body movements by the rider, and which thanks to a few ingenuous expedients and to the construction compactness provides for an overall mechanical efficiency that is comparable to that of the devices usually employed in bicycles and the like, by employing a simple foot-board for supporting the rider's foot in lieu of the pedal cranks.

Is is to be pointed out that by the device for the transmission of the present invention it is possible to overcome steep slopes with limited efforts.

The above mentioned object, as well as the indicated aims, are achieved by means of a bicycle characterized in that it provides for a drive transmission device comprising a foot-board for the rider; two simmetrically centered discs, one on each side of the rear wheel and connected together by a transverse hub which is eccentric in respect of both the discs and the rear wheel axle; a fork pivoted at the ends of said hub and supporting the foot-board.

Additional characteristics and advantages of the invention will become evident through the perusal of the description of a preferred but not exclusive embodiment of a bicycle according to the invention, which is illustrated only for exemplary and not limiting purposes, with the aid of the attached drawings, in which:

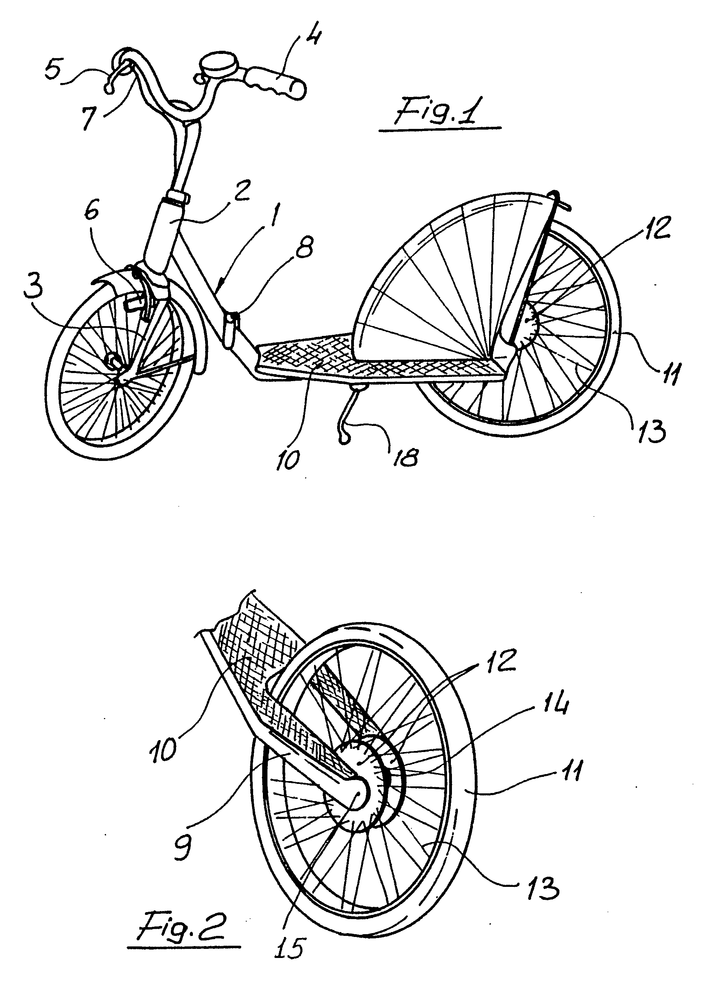

- fig. 1 shows a side view of the bicycle of the invention;

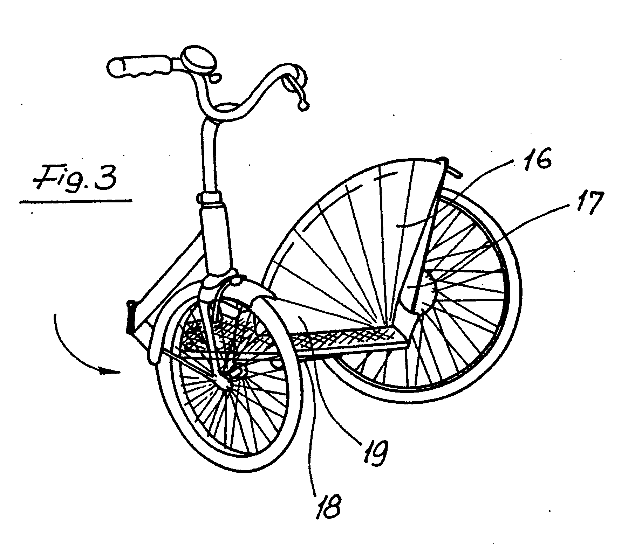

- fig. 2 illustrates a detail of the crank mechanism at the real wheel;
- fig. 3 shows the bicycles of the invention in the folded configuration.

Referring more particularly to the numerals in the above figures, the bicycle according to the invention comprises a frame 1, provided with a front vertical tube or sleeve 2 into which it is rotatably fitted the front vertical fork 3 of the bicycle that further extends upward with a handlebar 4 equipped with a brake lever 5.

A small diameter wheel is pivoted within the front fork 3, an a brake device 6 also carried by the fork is connected to a lever 5 through a conventional cable 7.

The frame 1 is further provided with a hinge joint 8 thanks to which the bicycle can be folded in order to allow for an easy transportation, such as within a motorcar trunk.

The frame 1 further extends rearwards with a horizontal fork 9 having two arms that support a foot-board 10 for the rest and the pushing action by the rider.

The rear wheel 11 is larger than the front one and carries two discs 12 that are simmetrically centered on both sides of the rear wheel 11 and are connected to the wheel rim by a plurality of spokes 13.

The discs 12 are firmly connected together at an eccentric position by a hub 14 which supports pivots 15 adapted to engage the arm ends of the fork 9 in order to pivotally couple the rear wheel 11 to the fork 9.

Thus a crank mechanism is realized comprising a connecting rod made up by the arms of the rear fork 9, and a crank corresponding to the distance between the center of discs 12 and the pivot point of the rear fork 9.

A fairing 16 is further provided for covering the upper fore quarter of the rear wheel 11, adapted to prevent damages to the rider's clothing.

At the lower end, the protection fairing 16 is fastened to the foot-board 10.

Rearwards such fairing 16 is provided with a bracket 17 pivoted to both ends of pin 15 and further connected, in the lower part, to the foot-board 10.

The foot-rest 10 is adapted to support the rider's foot. After starting the bicycle by using a foot, the rider causes the forward motion of the vehicle by pushing downwardly on the foot-board, and consequentely on the bicycle frame, which causes the rear wheel 11 to rotate for half a turn, whereas a flywheel effect is active in the other half turn of the wheel.

The foot-board 10 carries in the lower part a foldable foot 18 adapted to be extended by the rider in order to stand the vehicle when parking it.

The fairing 16 may be decorated on both sides with differente coloring of the individual slices, and in case by means of words, and/or badges and identification marks 19.

From the above it is evident that the invention achieves the intended objects.

Namely, after the vehicle has been started, the downward push applied by the rider onto the foot-board 10, impart to the bicycle a fairly regular and smooth movement.

The bicycle of the invention is adapted to be equipped with a saddle, if so desired to make easier the rider's resting and pushing on the foot-board 10.

Many changes and modifications can be applied to the proposed invention within the scope of the inventive idea; moreover all the particular members can be replaced by technically equivalent components.

As a matter of fact, the employed materials and the bicycle sizes can be as desired according to the necessities and the available technologies.

## Claims

1. A bicycle equipped with a particular drive transmission device comprising a foot-board (10) for supporting the rider's feet, characterized in that it provides for two simmetrically centered discs (12), one on each side of the rear wheel (11), and connected together by a transverse hub (14) which is eccentric in respect of both the discs (12) and the rear wheel axle.

2. A bicycle as claimed in claim 1, characterized in that at the ends of the rear fork (9) of the frame (1), it is applied a pivot housed in said hub (14) in order to allow the pivoting of said fork (9) to the rear wheel (11) of the bicycle.

3. A bicycle as claimed in claim 1 or 2, characterized in that the frame (1) comprises in its central portion a foot-board (10) per supporting the rider's feet which is subjected to a vertical reciprocating motion, imparted to said foot-board (10) through a downward push, said motion being adapted to cause the rear wheel (11) to rotate through a crank mechanism defined by said eccentric hub (14).

4. A bicycle as claimed in one or more of claims 1 to 3, characterized in that said crank mechanism defined by the eccentric hub (14) comprises a connecting rod made up by the arms of the rear fork (9), and a crank corresponding to the distance between the center of the discs (12) and the pivot point of the rear fork (9).

5. A bicycle as claimed in one or more of claims 1 to 4, characterized in that the frame (1) is equipped with a joint (8) thanks to which it can be folded sio as to allow for the transportation thereof in a car trunk.

6. A bicycle as claimed in one or more of claims 1 to 5, characterized in that it provides a fairing (16) of the upper fore quarter of the rim of the rear wheel (11) adapted to prevent damages to the rider's clothing during the riding, and to be decorated on both sides with words and/or badges and identification marks.

_Fig.1_

_Fig.2_

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3336046 (D.SEILING) <br> * column 2, line 50 - column 3, line 3; figures 1-7 * | 1-4 | B62K17/00 |
| A | | 6 | |
| X | FR-A-803740 (BORG-WARNER CORPORATION) <br> * the whole document * | 1-4 | |
| A | | 6 | |
| A | FR-A-2377928 (G.GESSI) <br> * the whole document * | 1-4 | |
| A | US-A-3647241 (P.HUYSSEN) <br> * the whole document * | 1-4 | |
| A | US-A-1705540 (M.RUMLEY) <br> * the whole document * | 1-4 | |
| A | US-A-3086795 (F.HATCHER) <br> * the whole document * | 1-4 | |
| A | US-A-4182522 (A.RITCHIE) <br> * figures 1, 2 * | 5 | TECHNICAL FIELDS SEARCHED (Int. Cl.5 ) <br><br> B62K <br> B62M |

The present search report has been drawn up for all claims

| Place of search | Date of completion of the search | Examiner |
|---|---|---|
| THE HAGUE | 17 SEPTEMBER 1990 | CZAJKOWSKI A.R. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)